(19) **Europäisches Patentamt / European Patent Office / Office européen des brevets**

(11) **EP 3 998 665 A1**

(12) # EUROPEAN PATENT APPLICATION
published in accordance with Art. 153(4) EPC

(43) Date of publication:
**18.05.2022 Bulletin 2022/20**

(21) Application number: **20849194.4**

(22) Date of filing: **07.08.2020**

(51) International Patent Classification (IPC):
**H01M 10/058** (2010.01)   **H01M 10/44** (2006.01)
**H01M 4/04** (2006.01)   **H01M 10/052** (2010.01)
**H01M 4/134** (2010.01)

(52) Cooperative Patent Classification (CPC):
**H01M 4/04; H01M 4/134; H01M 10/052;
H01M 10/058; H01M 10/44;** Y02E 60/10;
Y02P 70/50

(86) International application number:
**PCT/KR2020/010511**

(87) International publication number:
**WO 2021/025540 (11.02.2021 Gazette 2021/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.08.2019 KR 20190096360**

(71) Applicant: **LG Energy Solution, Ltd.
Seoul 07335 (KR)**

(72) Inventors:
• **YUN, Hyun-Woong
  Daejeon 34122 (KR)**
• **LEE, Jeong-Beom
  Daejeon 34122 (KR)**
• **HAH, Hoe-Jin
  Daejeon 34122 (KR)**

(74) Representative: **Hoffmann Eitle
Patent- und Rechtsanwälte PartmbB
Arabellastraße 30
81925 München (DE)**

(54) **LITHIUM METAL SECONDARY BATTERY AND BATTERY MODULE COMPRISING SAME**

(57)   Disclosed is a lithium metal secondary battery including: an electrode assembly including a negative electrode, a positive electrode and a separator between the negative electrode and the positive electrode; a non-aqueous electrolyte with which the electrode assembly is impregnated; and a battery casing in which the electrode assembly and the non-aqueous electrolyte are received, wherein the negative electrode includes a negative electrode current collector and a lithium metal layer formed on at least one surface of the negative electrode current collector, and the charge/discharge condition of the lithium metal secondary battery is controlled in such a manner that the battery is charged under a pressurized state with a constant pressure of 3-300 psi and discharged under a pressurized state with a constant pressure lower than the pressure applied to the pressurized state during charge.

FIG. 1

**Description**

TECHNICAL FIELD

The present disclosure relates to a lithium metal secondary battery and a battery module including the same. More particularly, the present disclosure relates to a lithium metal secondary battery characterized in that it is subjected to pressurization during charge and discharge, and a battery module including the same.
The present application claims priority to Korean Patent Application No. 10-2019-0096360 filed on August 7, 2019 in the Republic of Korea, the disclosures of which are incorporated herein by reference.

BACKGROUND ART

As electric, electronic, communication and computer industries have been developed rapidly, batteries having high capacity have been increasingly in demand. To meet such demand, lithium metal secondary batteries using lithium metal or a lithium alloy as a negative electrode having high energy density have been given many attentions.
A lithium metal secondary battery refers to a secondary battery using lithium metal or a lithium alloy as a negative electrode. Lithium metal has a low density of 0.54 g/cm$^3$ and a significantly low standard reduction potential of -3.045 V (SHE: based on the standard hydrogen electrode), and thus has been most spotlighted as an electrode material for a high-energy density battery.
Such a lithium metal secondary battery has not been commercialized due to its poor cycle characteristics. This is because lithium dendritic plating occurs during charge to cause an increase in surface area of an electrode and side reactions with an electrolyte.
Therefore, there is a need for developing a method for preventing dendritic plating of lithium physically.

DISCLOSURE

Technical Problem

The present disclosure is designed to solve the problems of the related art, and therefore the present disclosure is directed to providing a lithium metal secondary battery, which is subjected to application of a predetermined pressure during charge/discharge so that lithium dendritic plating may be prevented physically to provide improved cycle characteristics, and a battery module including the same.

Technical Solution

In one aspect of the present disclosure, there is provided a lithium metal secondary battery according to any one of the following embodiments.
According to the first embodiment, there is provided a lithium metal secondary battery including: an electrode assembly including a negative electrode, a positive electrode and a separator between the negative electrode and the positive electrode; a non-aqueous electrolyte with which the electrode assembly is impregnated; and a battery casing in which the electrode assembly and the non-aqueous electrolyte are received,

wherein the negative electrode includes a negative electrode current collector and a lithium metal layer formed on at least one surface of the negative electrode current collector, and
the charge/discharge condition of the lithium metal secondary battery is controlled in such a manner that the battery is charged under a pressurized state with a constant pressure of 3-300 psi and discharged under a pressurized state with a constant pressure lower than the pressure applied to the pressurized state during charge.

According to the second embodiment, there is provided the lithium metal secondary battery as defined in the first embodiment, wherein the pressure applied to the pressurized state during charge is 50-300 psi.
According to the third embodiment, there is provided the lithium metal secondary battery as defined in the first or the second embodiment, wherein the pressure applied to the pressurized state during discharge is 1-50 psi.
According to the fourth embodiment, there is provided the lithium metal secondary battery as defined in any one of the first to the third embodiments, wherein the pressurization is carried out by jig pressurization, magnetic pressurization or a combination thereof.
According to the fifth embodiment, there is provided the lithium metal secondary battery as defined in any one of the first to the fourth embodiments, wherein the current density during charge is 0.01-7 mA/cm$^2$.
According to the sixth embodiment, there is provided the lithium metal secondary battery as defined in any one of the first to the fifth embodiments, wherein the current density during charge is 0.05-3.5 mA/cm$^2$.

According to the seventh embodiment, there is provided the lithium metal secondary battery as defined in any one of the first to the sixth embodiments, wherein the temperature during charge is 25-45°C.

According to the eighth embodiment, there is provided the lithium metal secondary battery as defined in any one of the first to the seventh embodiments, which is charged at a temperature of 5-60°C under a pressurized state of 3-300 psi at a current density during charge of 0.01-7 mA/cm$^2$, and is discharged under a pressurized state of 1-50 psi.

According to the ninth embodiment, there is provided the lithium metal secondary battery as defined in any one of the first to the eighth embodiments, which is a pouch-type lithium metal secondary battery.

In another aspect of the present disclosure, there is provided a battery module according to any one of the following embodiments.

According to the tenth embodiment, there is provided a battery module including a plurality of unit cells and a module casing in which the unit cells are received, wherein the unit cell is the lithium metal secondary battery as defined in any one of the first to the ninth embodiments.

According to the eleventh embodiment, there is provided the battery module as defined in the tenth embodiment, wherein the lithium metal secondary battery is a pouch-type lithium metal secondary battery.

According to the twelfth embodiment, there is provided the battery module as defined in the tenth or the eleventh embodiment, wherein the module casing includes a rubber material.

According to the thirteenth embodiment, there is provided the battery module as defined in any one of the tenth to the twelfth embodiment, wherein the module casing includes a rubber material at the portion where it is in contact with the large-area surface of the unit cell.

In still another aspect of the present disclosure, there is provided a battery pack according to the following embodiment.

According to the fourth embodiment, there is provided a battery pack including the battery module as defined in any one of the tenth to the thirteenth embodiments.

## Advantageous Effects

According to an embodiment of the present disclosure, a battery is pressurized under a constant pressure of 3-300 psi during charge and is pressurized under a constant pressure lower than the pressure applied to the pressurized state during charge during discharge. In this manner, it is possible to physically prevent lithium dendritic plating occurring during charge, and thus to significantly improve the cycle characteristics of the battery and to prevent the battery from swelling.

In addition, according to an embodiment of the present disclosure, magnetic pressurization is used in addition to jig pressurization during the constant-pressure pressurization. In this manner, it is possible to reduce resistance during charge/discharge, to increase lithium ion transport rate and to improve rate characteristics.

## DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a graph illustrating the capacity retention of each of the lithium secondary batteries according to Example 1, Example 2 and Comparative Example 1 as a function of cycle number.

FIG. 2 is a graph illustrating the swelling characteristics of each of the lithium secondary batteries according to Example 1 and Example 2 as a function of cycle number.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In one aspect of the present disclosure, there is provided a lithium metal secondary battery including: an electrode assembly including a negative electrode, a positive electrode and a separator between the negative electrode and the positive electrode; a non-aqueous electrolyte with which the electrode assembly is impregnated; and a battery casing in which the electrode assembly and the non-aqueous electrolyte are received, wherein the negative electrode includes a negative electrode current collector and a lithium metal layer formed on at least one surface of the negative electrode current collector, and the charge/discharge condition of the lithium metal secondary battery is controlled in such a manner that the battery is charged under a pressurized state with a constant pressure of 3-300 psi and discharged under a pressurized state with a constant pressure lower than the pressure applied to the pressurized state during charge.

In the case of a conventional lithium metal secondary battery, lithium dendritic plating occurs on the negative electrode surface during charge, and thus the negative electrode is spaced apart from the positive electrode to cause the problem of a decrease in charge capacity, or the internal devices are deteriorated due to repeated deformation caused by charge/discharge, resulting in the problem of a decrease in charge/discharge cycle life.

To solve the above-mentioned problems, the lithium metal secondary battery according to an embodiment of the present disclosure is subjected to pressurization under a predetermined pressure during charge and discharge by using a constant-pressure pressurization device, thereby inhibiting swelling of its outer shape. In addition, in the lithium metal secondary battery according to an embodiment of the present disclosure, it is possible to physically prevent lithium dendritic plating that may occur while a lithium metal secondary battery is charged by charging the battery under a pressurized state, and to inhibit side reactions with an electrolyte, caused by lithium dendritic plating and an increase in surface area of an electrode. Therefore, it is possible to improve the cycle characteristics of the battery.

In the lithium metal secondary battery according to an embodiment of the present disclosure, the same pressure is not applied during charge and discharge, but the battery is controlled in such a manner that it is charged under a pressurized state with a constant pressure of 3-300 psi and is discharged under a pressurized state with a constant pressure lower than the pressure applied to the pressurized state during charge. Therefore, undesirably excessive pressure is not applied during discharge to allow freedom of use, and a pressurization device made of a light-weight material is used and mounted to a finished product merely under low pressure to provide an advantage in that energy density per weight may be increased. In addition, the battery is controlled in such a manner that it is subjected to a pressure lower than the pressure during charge, and thus it is possible to compress both electrodes, even if slight spacing occurs between both electrodes due to a swelling phenomenon after the completion of discharge, thereby reinforcing the contact between both electrodes and further improving battery performance.

Herein, 'pressurize a lithium metal secondary battery' or 'pressure is applied to a lithium metal secondary battery' means that pressure is applied in the thickness direction of the lithium metal secondary battery or to the large-area surface thereof.

The lithium metal secondary battery may be charged under a pressurized state with a pressure of 3-300 psi. According to an embodiment, the pressure during charge may be 50-300 psi, 50-290 psi, 100-300 psi, 100-200 psi, or 145-290 psi.

When the pressure applied to the pressurized state during charge satisfies the above-defined range, it is possible to effectively prevent lithium dendritic plating occurring during charge and to prevent leakage of a non-aqueous electrolyte, an increase in cell resistance and compression of a separator, caused by excessive pressurization. Therefore, it is possible to ensure cell safety.

The pressure applied to the pressurized state during discharge should be controlled to a pressure lower than the pressure applied to the pressurized state during charge. According to an embodiment, the pressure applied to the pressurized state during discharge may be 1-50 psi, 1-20 psi, 5-50 psi, or 5-10 psi. When the pressure applied to the pressurized state during discharge satisfies the above-defined range, it is possible to minimize a gap between both electrodes and to reduce cell resistance, and to allow use of a pressurization device made of a light-weight material so that energy density per weight may be increased desirably, when the pressurization device is mounted to a finished product.

The pressurization of the lithium metal secondary battery is carried out by using a charging/discharging device provided with a constant-pressure pressurization unit (pressure application unit).

The constant-pressure pressurization is a process of controlling the pressure applied to a pressurization member to be maintained constantly.

On the contrary, the pressurization method, i.e. constant-position pressurization method, applied as a pressurization method during charge according to the related art is a process of controlling the distance between a storage member and a pressurization member to be maintained constantly. For example, since the distance between a storage member and a pressurization member is maintained constantly in the constant-position pressurization method, significantly high pressure may be applied to the lithium metal secondary battery, as it is swelled during charge. The constant-pressure pressurization method applies pressure fixed by the pressurization member to the lithium metal secondary battery. Thus, when using the constant-pressure pressurization method, it is possible to minimize the problems occurring in the constant-position pressurization method due to the application of high pressure to a battery, the problems including an increase in internal resistance of a battery caused by compression of a separator, a micro-short phenomenon generated by a dendritic plating layer perforating a separator, and a cracking phenomenon generated by breakage of a positive electrode active material.

According to an embodiment of the present disclosure, the charging/discharging device provided with a constant-pressure pressurization unit may include: a storage member in which a lithium metal secondary battery is received; a pressurization member facing the storage member with the lithium metal secondary battery interposed therebetween, and spaced apart from the storage member with a variable distance; a pressurization unit configured to pressurize the secondary battery cell received in the storage member in the thickness direction by pushing or pulling the pressurization member toward or from the storage member; a measuring unit configured to measure the pressure applied to the pressurization member and/or the distance between the storage member and the pressurization member at a predetermined time interval; a controlling unit configured to receive the values of the pressure applied to the pressurization member and the distance between the storage member and the pressurization member at a predetermined time interval, and to maintain the pressure applied to the pressurization member by the pressurization unit and/or the distance between the storage member and the pressurization member constantly, or to change the pressure and/or the distance; and a charging unit by which the secondary battery is charged/discharged.

According to an embodiment of the present disclosure, the pressurization may be carried out by jig pressurization, magnetic pressurization or a combination thereof, depending on the type of the pressurization unit.

The jig pressurization method includes varying the distance between the pressurization member and the storage member by using, as a pressurization unit, a member, such as a spring, which can be deformed by internal pressure to apply pressure to the received secondary battery.

The magnetic pressurization method includes providing at least one of the pressurization member and the storage member in the form of a magnetic body or coupling a magnetic body to at least one of the pressurization member and the storage member to apply pressure to the received secondary battery by varying the distance between the pressurization member and the storage member through the pressurization unit, when magnetic force is applied between the pressurization member and the storage member. When using the magnetic pressurization method, it is possible to reduce the resistance in the secondary battery during charge/discharge, to increase lithium transport rate, and thus to improve rate characteristics.

According to an embodiment of the present disclosure, the charging/discharging device may be a single device applied to both charging and discharging of the lithium metal secondary battery, or a composite device including different types of pressurization units applied to charging and discharging separately.

When the charging/discharging device is a single device applied to both charging and discharging, the controlling unit allows the pressure applied to the pressurization member and/or the distance between the storage member and the pressurization member to be maintained constantly or changed. In a variant, different pressurization units may be used separately for charging and discharging. When different pressurization units are used separately for charging and discharging, the pressurization unit for charging may have higher pressure as compared to the pressurization unit for discharging. For example, the pressurization unit for charging may use a spring having a higher elastic coefficient or may use a larger number of springs, when springs with the same elastic coefficient are used for the pressurization units.

In addition, when a composite device including different types of pressurization units applied to charging and discharging separately is used, a storage member, pressurization member and a pressurization unit for charging are installed separately from a storage member, pressurization member and a pressurization unit for discharging. In this manner, after charging a lithium metal secondary battery, it may be removed from the storage member for charging, transferred to the storage member for discharging, and then discharged.

The current density during charge may be 0.01-7 mA/cm$^2$ or 0.05-3.5 mA/cm$^2$. When the current density satisfies the above-defined range, electric current delocalization is decreased and uniform lithium plating is performed to prevent the battery from deterioration.

In addition, each of the temperature during charge and the temperature during discharge may be 5-60°C or 25-45°C, independently. When the temperature during charge and the temperature during discharge satisfy the above-defined range, it is possible to satisfy the activation energy for chemical reaction, to accelerate chemical reaction and to reduce resistance. As a result, it is possible to improve capacity retention.

According to an embodiment of the present disclosure, the lithium metal secondary battery may be charged at a temperature of 5-60°C under a pressurized state of 3-300 psi at a current density during charge of 0.01-7 mA/cm$^2$, and may be discharged under a pressurized state of 1-50 psi.

According to another embodiment of the present disclosure, the lithium metal secondary battery may be charged at a temperature of 25-45°C under a pressurized state of 50-300 psi at a current density during charge of 0.05-3.5 mA/cm$^2$, and may be discharged under a pressurized state of 5-10 psi.

The negative electrode includes a negative electrode current collector and a lithium metal layer formed on the negative electrode current collector. In addition, the lithium metal layer includes a sheet-like metal, and may have a controllable width depending on the shape of an electrode to facilitate the manufacture of an electrode. The lithium metal layer may have a thickness of 0-300 μm. Herein, the expression 'lithium metal layer has a thickness of 0 μm' means

that the lithium metal layer is not formed on the negative electrode current collector, when the lithium metal secondary battery is assembled for the first time. Even when the lithium metal layer is not formed on the negative electrode current collector, lithium ions are transported from the positive electrode during charge to form a lithium metal layer on the surface of the negative electrode current collector, thereby allowing operation of the lithium metal secondary battery.

Non-limiting examples of the negative electrode current collector include foil made of copper, gold, nickel, copper alloy or a combination thereof.

Meanwhile, the positive electrode may include a positive electrode current collector and a positive electrode active material layer formed on one surface or both surfaces thereof. Herein, non-limiting examples of the positive electrode current collector include foil made of aluminum, nickel or a combination thereof, and the positive electrode active material contained in the positive electrode active material layer may be any one selected from the group consisting of $LiCoO_2$, $LiNiO_2$, $LiMn_2O_4$, $LiCoPO_4$, $LiFePO_4$, $LiNi_{1/3}Mn_{1/3}Co_{1/3}O_2$ and $LiNi_{1-x-y-z}Co_xM1_yM2_zO_2$ (wherein each of M1 and M2 independently represents any one selected from Al, Ni, Co, Fe, Mn, V, Cr, Ti, W, Ta, Mg and Mo, each of x, y and z independently represent the atomic fraction of each element forming oxide, and $0 \leq x < 0.5$, $0 \leq y < 0.5$, $0 \leq z < 0.5$ and $0 < x + y + z \leq 1$), or a mixture of two or more of them.

In addition, the positive electrode active material layer may further include a conductive material to improve electrical conductivity. Herein, the conductive material is not particularly limited, as long as it is an electrically conductive material causing no chemical change in the lithium metal secondary battery. In general, carbon black, graphite, carbon fibers, carbon nanotubes, metal powder, conductive metal oxide or an organic conductive material may be used. Commercially available products of such conductive materials include acetylene black (available from Chevron Chemical Company or Gulf Oil Company), Ketjen Black EC series (available from Armak Company), Vulcan XC-72 (available from Cabot Company) and Super P (available from MMM Company). For example, acetylene black, carbon black or graphite may be used.

Further, various types of binders which serve to retain the positive electrode active material on the positive electrode current collector and to interconnect the positive electrode active material particles may be used. Particular examples of such binders include polyvinylidene fluoride-co-hexafluoropropylene (PVDF-co-HFP), polyvinylidene fluoride (PVDF), polyacrylonitrile, polymethyl methacrylate, styrene butadiene rubber (SBR), carboxymethyl cellulose (CMC), or the like.

In addition, the separator may include a porous polymer substrate. The porous polymer substrate may be any porous polymer substrate used conventionally for a lithium secondary battery, and particular examples thereof include a polyolefin-based porous membrane or non-woven web but are not limited thereto.

Herein, particular examples of the polyolefin-based porous membrane may include those formed of polymers including polyethylene, such as high-density polyethylene, linear low-density polyethylene, low-density polyethylene and ultrahigh-molecular weight polyethylene, polypropylene, polybutylene and polypentene, alone or in combination.

In addition to the polyolefin-based non-woven web, particular examples of the non-woven web may include those formed of polymers including polyethylene terephthalate, polybutylene terephthalate, polyester, polyacetal, polyamide, polycarbonate, polyimide, polyether ether ketone, polyether sulfone, polyphenylene oxide, polyphenylene sulfide, polyethylene naphthalene, or the like, alone or in combination. The non-woven web structure may be a spun-bonded non-woven web or a melt blown non-woven web including long fibers.

The thickness of the porous polymer substrate is not particularly limited but may be 1-100 $\mu$m, or 5-50 $\mu$m.

In addition, the size of pores present in the porous polymer substrate and the porosity are not particularly limited. However, the pore size and porosity may be 0.001-50 $\mu$m and 10-95%, respectively.

According to an embodiment of the present disclosure, the separator may be provided with a porous polymer substrate, and a porous coating layer position on at least one surface of the porous polymer substrate and including inorganic particles and a binder polymer.

Further, the electrolyte salt contained in the non-aqueous electrolyte that may be used in the present disclosure is a lithium salt. Any lithium salt used conventionally for an electrolyte for a lithium secondary battery may be used without particular limitation. For example, the anion of the lithium salt may be any one selected from the group consisting of $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

Particular examples of the organic solvent that may be contained in the non-aqueous electrolyte may include those used conventionally for an electrolyte for a lithium secondary battery with no particular limitation. For example, it is possible to use ethers, esters, amides, linear carbonates or cyclic carbonates, alone or in combination.

Typical examples of the organic solvent may include carbonate compounds, such as cyclic carbonates, linear carbonates or mixtures thereof.

Particular examples of the cyclic carbonate compounds include any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate and halides thereof, or a mixture of two or more of them.

Particular examples of such halides include fluoroethylene carbonate (FEC) but are not limited thereto.

In addition, particular examples of the linear carbonate compounds include any one selected from the group consisting of dimethyl carbonate (DMC), diethyl carbonate (DEC), dipropyl carbonate, ethyl methyl carbonate (EMC), methyl propyl carbonate and ethyl propyl carbonate, or a mixture of two or more of them, but are not limited thereto.

Particularly, ethylene carbonate and propylene carbonate, which are cyclic carbonates among the carbonate organic solvents, have a high dielectric constant and dissociate the lithium salt in an electrolyte well. In addition, it is possible to prepare an electrolyte having high electrical conductivity, when using such cyclic carbonates in combination with low-viscosity low-dielectric constant linear carbonates, such as dimethyl carbonate and diethyl carbonate, at an adequate ratio.

Further, among the organic solvents, particular examples of the ethers may include any one selected from the group consisting of dimethyl ether, diethyl ether, dipropyl ether, methyl ethyl ether, methyl propyl ether and ethyl propyl ether, or a mixture of two or more of them, but are not limited thereto.

Among the organic solvents, particular examples of the esters include any one selected from the group consisting of methyl acetate, ethyl acetate, propyl acetate, methyl propionate, ethyl propionate, $\gamma$-butyrolactone, $\gamma$-valerolactone, $\gamma$-caprolactone, $\sigma$-valerolactone and $\epsilon$-caprolactone, or a mixture of two or more of them, but are not limited thereto.

Injection of the non-aqueous electrolyte may be carried out in an adequate step during the process for manufacturing a lithium secondary battery depending on the manufacturing process of a final product and properties required for a final product. In other words, injection of the non-aqueous electrolyte may be carried out before the assemblage of a lithium secondary battery or in the final step of the assemblage of a lithium secondary battery.

The lithium metal secondary battery according to the present disclosure may be subjected to a lamination or stacking step of a separator with electrodes and a folding step, in addition to the conventional winding step. In addition, the battery casing may have a cylindrical, prismatic, pouch-like or coin-like shape. According to an embodiment of the present disclosure, the lithium metal secondary battery may be a cylindrical lithium metal secondary battery, a prismatic lithium metal secondary battery, a pouch-type lithium metal secondary battery or a coin-type lithium metal secondary battery, particularly a pouch-type lithium metal secondary battery.

In another aspect, there is provided a method for operating a lithium metal secondary battery.

The method for operating a lithium metal secondary battery includes the steps of: (1) charging a lithium metal secondary battery under a pressurized state with a constant pressure of 3-300 psi; (2) discharging the charged lithium metal secondary battery under a pressurized state with a constant pressure lower than the pressure applied to the pressurized state during charging; and (3) repeating steps (1) and (2) sequentially. Herein, the lithium metal secondary battery includes: an electrode assembly including a negative electrode, a positive electrode and a separator between the negative electrode and the positive electrode; a non-aqueous electrolyte with which the electrode assembly is impregnated; and a battery casing in which the electrode assembly and the non-aqueous electrolyte are received, wherein the negative electrode includes a negative electrode current collector and a lithium metal layer formed on at least one surface of the negative electrode current collector.

In still another aspect of the present disclosure, there is provided a battery module including a plurality of unit cells and a module casing in which the unit cells are received, wherein the unit cell is the above-defined lithium metal secondary battery.

According to an embodiment of the present disclosure, the battery module may include two or more pouch-type unit cells and a module casing in which the pouch-type unit cells are received, wherein the module casing may include a rubber material.

The pouch-type lithium metal secondary battery according to the present disclosure undergoes an increase in volume during charge and a decrease in volume during discharge. Pressurization during charge can prevent a significant increase in volume according to the present disclosure. However, such an increase in volume cannot be prevented perfectly. In addition, a decrease in volume during discharge is inevitable.

According to the present disclosure, the module casing may include a rubber material in order to alleviate an increase/decrease in volume during charge/discharge of the unit cells.

Herein, the module casing may totally include a rubber material, or only a portion that is in contact with the large-area surface of the unit cell may include a rubber material.

In yet another aspect of the present disclosure, there are provided a battery pack including the battery module, and a device including the battery pack as a power source.

Herein, particular examples of the device may include, but are not limited to: power tools driven by an electric motor; electric cars, including electric vehicles (EV), hybrid electric vehicles (HEV), plug-in hybrid electric vehicles (PHEV), or the like; electric carts, including electric bikes (E-bike) and electric scooters (E-scooter); electric golf carts; electric power storage systems; or the like.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

1. Manufacture of Lithium Metal Secondary Battery

(1) Manufacture of Positive Electrode

First, 95 parts by weight of $LiNi_{1/3}Mn_{1/3}Co_{1/3}O_2$ as a positive electrode active material, 2.5 parts by weight of Super P as a conductive material and 2.5 parts by weight of polyvinylidene fluoride (PVDF) as a binder were added to N-methyl-2-pyrrolidone (NMP) as a solvent to prepare positive electrode active material slurry. Next, the positive electrode active material slurry was coated on both surfaces of an aluminum current collector to a thickness of 65 $\mu$m on each surface, followed by drying, pressing and punching into a predetermined size, thereby providing a double-sided positive electrode sheet. In addition, a single-sided positive electrode sheet was obtained in the same manner as described above, except that the positive electrode active material slurry was coated on only one surface.

(2) Manufacture of Negative Electrode

Lithium metal foil having a thickness of 20 $\mu$m was attached to both surfaces of a copper current collector having a thickness of 10 $\mu$m to obtain a negative electrode sheet.

(3) Manufacture of Lithium Metal Secondary Battery

Thirty-five (35) separators (polyethylene-based porous polymer substrate having porous coating layers containing a mixture of alumina with PVDF binder on both surfaces thereof), fifteen (15) double-sided positive electrode sheets and sixteen (16) double-sided negative electrode sheets were used, and two single-sided positive electrode sheets were used at the outermost part to stack eleven (11) bi-cells. Next, the bi-cells were assembled through a stack & folding process known to those skilled in the art to obtain a 2A lithium metal battery. Then, an electrolyte including 1 wt% of vinylene carbonate (VC) as an additive and 4M $LiPF_6$ dissolved in a solvent containing fluoroethylene carbonate (FEC) mixed with ethyl methyl carbonate (EMC) at a volume ratio of 30:70 was injected to the battery casing. After that, the battery casing was sealed completely to obtain a lithium metal secondary battery.

2. Determination of Cycle Characteristics (Capacity Retention) of Lithium Metal Secondary Battery

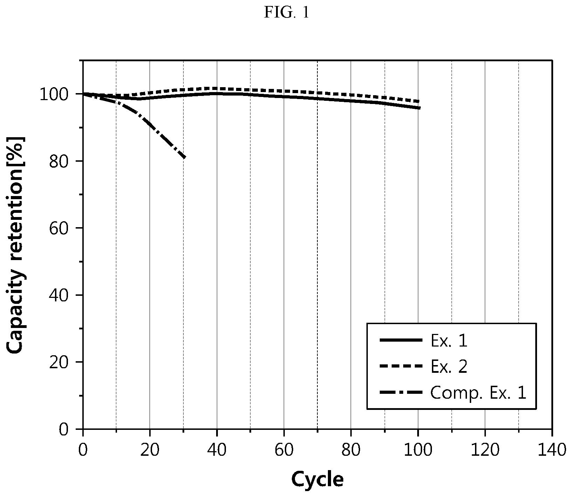

The lithium metal secondary battery was charged/discharged under the charge/discharge pressurization conditions according to Example 1, Example 2, Example 3, Comparative Example 1 and Comparative Example 2 as shown in the following Table 1. Particularly, the lithium metal secondary battery was charged to 4.25 V under a constant-current/constant-voltage (CC/CV) condition at a constant current of 1.5 mA/cm$^2$. After completing charge with 0.05C cut-off, the lithium metal secondary battery was discharged (discharge temperature 25°C) to 3V under a constant-current (CC) condition to 3V at a current density of 8 mA/cm$^2$. The above-mentioned charge/discharge cycles were repeated 100 times. The capacity maintenance after repeating the charge/discharge cycles 80 times is shown in Table 1 and FIG. 1. However, in the case of Comparative Example 1, the lithium metal battery could not be operated any longer after the 30$^{th}$ cycle, and thus evaluation of cycle characteristics was stopped.

Herein, capacity retention after the n$^{th}$ cycle was calculated according to the following formula.

$$\text{Capacity retention (\%) after the n}^{th}\text{ cycle} = [(\text{Discharge capacity of secondary}$$
$$\text{battery after the n}^{th}\text{ cycle})/(\text{Discharge capacity of secondary battery after the first cycle})]$$
$$\text{x } 100$$

Herein, each of the lithium metal secondary batteries according to Examples 1-3 and Comparative Example 2 was charged/discharged by using a constant-pressure jig pressurization-type charging device provided with a pressurization unit.

Particularly, in Examples 1-3 and Comparative Example 2, prepared was a constant-pressure pressurization device, including: a storage member in which a lithium metal secondary battery is received; a pressurization member facing the storage member with the secondary cell interposed therebetween, and spaced apart from the storage member with a variable distance; a pressurization unit configured to pressurize the secondary battery cell received in the storage member in the thickness direction by pushing or pulling the pressurization member toward or from the storage member; a measuring unit configured to measure the pressure applied to the pressurization member and/or the distance between the storage member and the pressurization member at a predetermined time interval; and a controlling unit configured to receive the values of the pressure applied to the pressurization member and the distance between the storage member and the pressurization member at a predetermined time interval, and to change the pressure applied to the pressurization member by the pressurization unit and/or the distance between the storage member and the pressurization member. The lithium metal secondary battery obtained as described above was mounted to the pressurization device. Herein, a spring was mounted to the pressurization member and the pressurization member was fixed with a screw to carry out buffering action depending on a change in pressure during charge/discharge. Then, the lithium metal secondary battery was connected to a charger (PNE Solution Co., PESC05), and charge/discharge was carried out under the condition as shown in Table 1. Herein, the pressure applied to the lithium secondary battery during charge/discharge was controlled through the pressurization device.

Meanwhile, the lithium metal secondary battery according to Comparative Example 1 was charged/discharged by using a constant-position jig pressurization-type charging device provided with a pressurization unit.

Particularly, in Comparative Example 1, prepared was a constant-position pressurization device, including: a storage member in which a lithium metal secondary battery is received; a pressurization member facing the storage member with the secondary cell interposed therebetween, and spaced apart from the storage member with a variable distance; a pressurization unit configured to pressurize the secondary battery cell received in the storage member in the thickness direction by pushing or pulling the pressurization member toward or from the storage member; a measuring unit configured to measure the pressure applied to the pressurization member and/or the distance between the storage member and the pressurization member at a predetermined time interval; and a controlling unit configured to receive the values of the pressure applied to the pressurization member and the distance between the storage member and the pressurization member at a predetermined time interval, and to maintain the pressure applied to the pressurization member by the pressurization unit and/or the distance between the storage member and the pressurization member constantly. The lithium metal secondary battery obtained as described above was mounted to the pressurization device. Herein, no spring was mounted to the pressurization member and the pressurization member was merely fixed with a screw. Then, the lithium metal secondary battery was connected to a charger (PNE Solution Co., PESC05), and charge/discharge was carried out under the condition as shown in Table 1. Herein, the pressure applied to the lithium secondary battery during charge/discharge was controlled through the pressurization device.

3. Determination of Swelling of Lithium Metal Secondary Battery

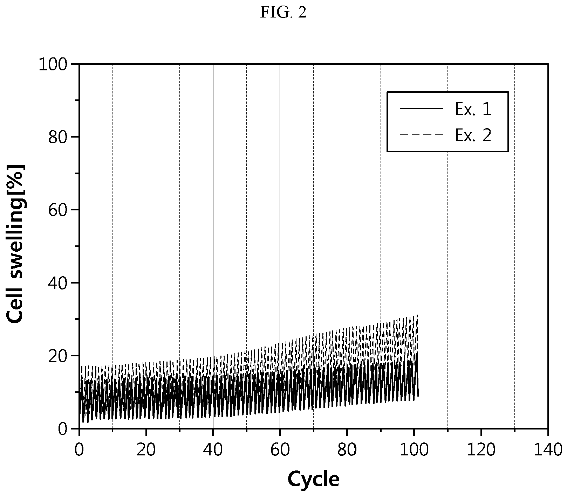

The secondary battery was charged/discharged under the same charge/discharge conditions as described in 2. The swelling characteristics of the secondary battery was evaluated after the $n^{th}$ cycle. The results are shown in the following Table 1 and FIG. 2.

Herein, cell swelling after the $n^{th}$ cycle was calculated according to the following formula.

$$\text{Cell swelling (\%) after the } n^{th} \text{ cycle} = [\{(\text{Thickness of secondary battery after the } n^{th} \text{ cycle}) - (\text{Thickness of secondary battery after the first cycle})\} /(\text{Thickness of secondary battery after the first cycle})] \times 100$$

[Table 1]

| | | Charge/discharge condition | | | | Capacity retention (%) after 100 cycles | Cell swelling (%) | |
|---|---|---|---|---|---|---|---|---|
| | | Pressurization condition during charge (psi) | Pressurization condition during discharge (psi) | Temperature during charge (°C) | Current density during charge (mA/cm$^2$) | | After 30 cycles | After 100 cycles |
| | Ex. 1 | 290 | 5 | 25 | 1.5 | 95 | 13.5 | 20 |
| | Ex. 2 | 145 | 5 | 25 | 1.5 | 95 | 19.0 | 34 |
| | Ex. 3 | 50 | 5 | 25 | 1.5 | 85 | 32 | 55 |

(continued)

| | Charge/discharge condition | | | | Capacity retention (%) after 100 cycles | Cell swelling (%) | |
| --- | --- | --- | --- | --- | --- | --- | --- |
| | Pressurization condition during charge (psi) | Pressurization condition during discharge (psi) | Temperature during charge (°C) | Current density during charge (mA/cm$^2$) | | After 30 cycles | After 100 cycles |
| Comp. Ex. 1 | 580 | 5 | 25 | 1.5 | Not operated until the 100th cycle (80% after 30 cycles) | 14.5 | Not available |
| Comp. Ex. 2 | 450 | 5 | 25 | 1.5 | Not operated until the 100th cycle (80% after 50 cycles) | 14.4 | Not available |

Referring to Table 1, in the case of Examples 1-3, since the charge/discharge condition of each lithium metal secondary battery is controlled in such a manner that the battery is charged under a pressurized state with a constant pressure of 3-300 psi, and discharged under a pressurized state with a constant pressure lower than the pressure applied to the pressurized state during charge, the lithium metal secondary battery shows a significantly high capacity retention of 85% or more even after the 100th cycle. On the contrary, in the case of Comparative Examples 1 and 2, since each lithium metal secondary battery is charged under a pressurized state with a pressure larger than 300 psi, it shows a decrease in capacity retention to 80% merely after 30 cycles or 50 cycles and cannot be operated any longer.

In addition, in Comparative Examples 1 and 2, since such a highly pressure is maintained considerably during charge/discharge, there is an advantage in that the cell swelling phenomenon is reduced after the initial operation stage, i.e. after 30 cycles. However, as charge/discharge cycles are further repeated, the battery life is deteriorated rapidly and the battery cannot be operated after 30 cycles or 50 cycles as mentioned above. Therefore, it is not possible to determine the cell swelling characteristics after 100 cycles. In the case of Examples 1-3, each battery has similar or slightly increased swelling characteristics as compared to Comparative Examples 1 and 2 after the initial operation stage, i.e. after 30 cycles. However, it can be seen that as charge/discharge cycles are further repeated until the 100th cycle, the battery shows significantly improved life characteristics, while maintaining the initial swelling characteristics.

It should be understood that the above-described embodiments are given by way of illustration only and various changes and modifications within the scope of the disclosure will become apparent to those skilled in the art from this detailed description. Therefore, the embodiments disclosed herein are for illustrative purposes only and are not intended to limit the scope of the present disclosure, and the scope of the present disclosure is not limited thereto. It should be also understood that the scope of the present disclosure is defined only by the following claims, and any technical gist made within the equivalent of the claims falls within the scope of the present disclosure.

**Claims**

1.  A lithium metal secondary battery comprising: an electrode assembly comprising a negative electrode, a positive electrode and a separator between the negative electrode and the positive electrode; a non-aqueous electrolyte with which the electrode assembly is impregnated; and a battery casing in which the electrode assembly and the non-aqueous electrolyte are received,

    wherein the negative electrode comprises a negative electrode current collector and a lithium metal layer formed on at least one surface of the negative electrode current collector, and
    the charge/discharge condition of the lithium metal secondary battery is controlled in such a manner that the lithium metal secondary battery is charged under a pressurized state with a constant pressure of 3-300 psi and discharged under a pressurized state with a constant pressure lower than the pressure pressurized during charge.

**2.** The lithium metal secondary battery according to claim 1, wherein the pressure pressurized during charge is 50-300 psi.

**3.** The lithium metal secondary battery according to claim 1, wherein the pressure pressurized during discharge is 1-50 psi.

**4.** The lithium metal secondary battery according to claim 1, wherein the pressurization is carried out by jig pressurization, magnetic pressurization or a combination thereof.

**5.** The lithium metal secondary battery according to claim 1, wherein the current density during charge is 0.01-7 mA/cm$^2$.

**6.** The lithium metal secondary battery according to claim 1, wherein the current density during charge is 0.05-3.5 mA/cm$^2$.

**7.** The lithium metal secondary battery according to claim 1, wherein the temperature during charge is 5-60°C.

**8.** The lithium metal secondary battery according to claim 1, which is charged at a temperature of 5-60°C under a pressurized state of 3-300 psi at a current density during charge of 0.01-7 mA/cm$^2$, and is discharged under a pressurized state of 1-50 psi.

**9.** The lithium metal secondary battery according to claim 1, which is a pouch-type lithium metal secondary battery.

**10.** A battery module comprising a plurality of unit cells and a module casing in which the unit cells are received, wherein the unit cell is the lithium metal secondary battery as defined in any one of claims 1 to 9.

**11.** The battery module according to claim 10, wherein the lithium metal secondary battery is a pouch-type lithium metal secondary battery.

**12.** The battery module according to claim 10, wherein the module casing comprises a rubber material.

**13.** The battery module according to claim 10, wherein the module casing comprises a rubber material at the portion where it is in contact with the large-area surface of the unit cell.

**14.** A battery pack comprising the battery module as defined in claim 10.

FIG. 1

FIG. 2

## INTERNATIONAL SEARCH REPORT

| | International application No. |
|---|---|
| | **PCT/KR2020/010511** |

**A. CLASSIFICATION OF SUBJECT MATTER**

**H01M 10/058**(2010.01)i; **H01M 10/44**(2006.01)i; **H01M 4/04**(2006.01)i; **H01M 10/052**(2010.01)i; **H01M 2/10**(2006.01)i; **H01M 4/134**(2010.01)i; **H01M 2/02**(2006.01)i

According to International Patent Classification (IPC) or to both national classification and IPC

**B. FIELDS SEARCHED**

Minimum documentation searched (classification system followed by classification symbols)

H01M 10/058; B60L 11/18; H01M 10/04; H01M 10/052; H01M 10/0562; H01M 10/0585; H01M 10/44; H01M 2/02; H01M 4/58; H01M 4/04; H01M 2/10; H01M 4/134

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 금속 (lithium metal), 가압 (compress), 이차 전지 (secondary battery), 충전 (charge), 방전 (discharge)

**C. DOCUMENTS CONSIDERED TO BE RELEVANT**

| Category* | Citation of document, with indication, where appropriate, of the relevant passages | Relevant to claim No. |
|---|---|---|
| Y | WO 2010-016881 A1 (SION POWER CORPORATION) 11 February 2010. See abstract; claims 1-3, 12 and 44-50; page 5, lines 18-25; page 12, lines 14-29; page 26, lines 27-30; page 28, lines 18-28; and figure 1. | 1-14 |
| Y | JP 2015-095281 A (TOYOTA MOTOR CORP.) 18 May 2015. See abstract; claim 1; paragraphs [0005], [0033]-[0035], [0070], [0092] and [0093]; and figures 5 and 6. | 1-14 |
| A | KR 10-1629482 B1 (LG CHEM, LTD.) 10 June 2016. See entire document. | 1-14 |
| A | JP 5559989 B2 (IDEMITSU KOSAN CO., LTD.) 23 July 2014. See entire document. | 1-14 |

| ☑ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 November 2020** | **24 November 2020** |

| Name and mailing address of the ISA/KR | Authorized officer |
|---|---|
| **Korean Intellectual Property Office** **Government Complex Daejeon Building 4, 189, Cheongsa-ro, Seo-gu, Daejeon, Republic of Korea 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2020/010511** |

**C.     DOCUMENTS CONSIDERED TO BE RELEVANT**

| Category* | Citation of document, with indication, where appropriate, of the relevant passages | Relevant to claim No. |
| --- | --- | --- |
| PX | KR 10-2019-0095904 A (LG CHEM, LTD.) 16 August 2019. See claims 1-14. | 1-14 |

**INTERNATIONAL SEARCH REPORT**
**Information on patent family members**

International application No.

**PCT/KR2020/010511**

| Patent document cited in search report | | | Publication date (day/month/year) | Patent family member(s) | | | Publication date (day/month/year) |
|---|---|---|---|---|---|---|---|
| WO | 2010-016881 | A1 | 11 February 2010 | CN | 102144324 | A | 03 August 2011 |
| | | | | CN | 102144324 | B | 30 September 2015 |
| | | | | EP | 2324526 | A1 | 25 May 2011 |
| | | | | EP | 2365566 | A1 | 14 September 2011 |
| | | | | EP | 2365566 | B1 | 14 October 2020 |
| | | | | EP | 2669975 | A1 | 04 December 2013 |
| | | | | EP | 3694036 | A1 | 12 August 2020 |
| | | | | JP | 2011-530784 | A | 22 December 2011 |
| | | | | JP | 2014-239047 | A | 18 December 2014 |
| | | | | JP | 5731382 | B2 | 10 June 2015 |
| | | | | KR | 10-2010-0113553 | A | 21 October 2010 |
| | | | | KR | 10-2011-0052594 | A | 18 May 2011 |
| | | | | KR | 10-2019-0062623 | A | 05 June 2019 |
| | | | | US | 10312545 | B2 | 04 June 2019 |
| | | | | US | 10320027 | B2 | 11 June 2019 |
| | | | | US | 2018-0048018 | A1 | 15 February 2018 |
| | | | | US | 2018-0269520 | A1 | 20 September 2018 |
| | | | | US | 2019-0386334 | A1 | 19 December 2019 |
| | | | | US | 2020-0091547 | A1 | 19 March 2020 |
| | | | | US | 2020-0313225 | A1 | 01 October 2020 |
| | | | | US | 9780404 | B2 | 03 October 2017 |
| JP | 2015-095281 | A | 18 May 2015 | CN | 104638310 | A | 20 May 2015 |
| | | | | JP | 6123642 | B2 | 10 May 2017 |
| | | | | US | 2015-0134172 | A1 | 14 May 2015 |
| | | | | US | 9399404 | B2 | 26 July 2016 |
| KR | 10-1629482 | B1 | 10 June 2016 | KR | 10-2015-0015303 | A | 10 February 2015 |
| JP | 5559989 | B2 | 23 July 2014 | JP | 2010-056070 | A | 11 March 2010 |
| KR | 10-2019-0095904 | A | 16 August 2019 | EP | 3671936 | A2 | 24 June 2020 |
| | | | | US | 2019-0341647 | A1 | 07 November 2019 |
| | | | | WO | 2019-155452 | A2 | 15 August 2019 |
| | | | | WO | 2019-155452 | A3 | 17 October 2019 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190096360